## Europäisches Patentamt
## European Patent Office
## Office européen des brevets

(19)

(11) Veröffentlichungsnummer: **0 124 690**
**B1**

(12) **EUROPÄISCHE PATENTSCHRIFT**

(45) Veröffentlichungstag der Patentschrift:
**15.07.87**

(51) Int. Cl.⁴: **B 24 B 1/04**

(21) Anmeldenummer: **84101415.2**

(22) Anmeldetag: **11.02.84**

(54) **Verfahren zur Bearbeitung eines Werkstoffs oder Werkstücks mittels Ultraschall und Vorrichtung zur Durchführung des Verfahrens.**

(30) Priorität: **26.02.83 DE 3306841**

(43) Veröffentlichungstag der Anmeldung:
**14.11.84 Patentblatt 84/46**

(45) Bekanntmachung des Hinweises auf die Patenterteilung:
**15.07.87 Patentblatt 87/29**

(84) Benannte Vertragsstaaten:
**CH FR GB IT LI**

(56) Entgegenhaltungen:
**DE - A - 2 330 782**
**US - A - 3 274 738**
**US - A - 3 492 847**
**US - A - 3 913 277**

**Patent Abstracts of Japan Band 3, Nr. 12, 31. Januar 1979 Seite 7M47 & JP-A-53-135095**
**Patent Abstracts of Japan Band 7, Nr. 24, 29. Januar 1983 & JP-A-57-178663**

(73) Patentinhaber: **Mafell-Maschinenfabrik Rudolf Mey GmbH & Co. KG, Postfach 1180, D-7238 Oberndorf a.N. Aistaig (DE)**

(72) Erfinder: **Haas, Rüdiger, Sportplatzweg 2, D-7213 Dunningen 3 (DE)**
Erfinder: **Krauss, Ernst, Suppengasse 15, D-7238 Oberndorf-Aistaig (DE)**
Erfinder: **Walter, Herbert, Jockelsberg 4, D-7239 Fluorn-Winzeln (DE)**

(74) Vertreter: **Schmid, Berthold et al, Patentanwälte Dipl.-Ing. B. Schmid Dr. Ing. G. Birn Dipl.-Phys. H. Quarder Falbenhennenstrasse 17, D-7000 Stuttgart 1 (DE)**

# Beschreibung

Die Erfindung bezieht sich auf ein Verfahren und eine Vorrichtung zur Bearbeitung eines insbesondere ultraharten Werkstoffs oder Werkstücks mittels Ultraschall, wobei ein zustellbares Bearbeitungswerkzeug mit zumindest weitgehend konstantem, mittels einer Regelungsvorrichtung geregeltem Auflagedruck am Werkstoff oder Werkstück angedrückt wird. Ein derartiges Verfahren ist durch die JP-A-53-13 50 95 («Patent Abstracts of Japan», Band 3, Nr. 12, 31. Januar 1979, Seite 7 M47) bekannt geworden. Dort findet eine Relativbewegung des Ultraschall-Bearbeitungswerkzeugs gegenüber dem Werkstoff oder Werkstück in X- und/oder Y-Richtung statt. Entsprechend der gewählten Vorschubbewegung kann eine ganz bestimmte Kontur ausgearbeitet werden. Der Anpressdruck dieses Bearbeitungswerkzeugs wird mittels eines Überwachungselements ständig überprüft. Ein vom Überwachungselement ausgehendes Signal, welchem die Ultraschallschwingung überlagert ist, wird über einen entsprechenden Filter geleitet, welcher die überlagerte Ultraschalloszillation eliminiert. Das restliche Signal wird zur Beschleunigung oder Verlangsamung der Vorschubbewegung des Werkstückes gegenüber dem Werkzeug verwendet. Auf diese Weise soll der stets gleichbleibende seitliche Anpressdruck gewährleistet werden.

Wenn man mit diesem Verfahren eine Innen- oder Aussenkontur bearbeitet oder erstellt, kann dieses Verfahren vermutlich zu einem befriedigenden Arbeitsergebnis führen. Dies dürfte, insbesondere dann der Fall sein, wenn die Kontur mit einem schmalen, messerartigen Werkzeug bearbeitet oder erstellt werden soll. Der Druckschrift ist nicht zu entnehmen, ob und gegebenenfalls wie das Eindringen des Werkzeuges in das Werkstück in Z-Richtung zu Beginn der Erstellung oder Bearbeitung der Kontur vorgenommen wird. Auf jeden Fall besteht bei der dortigen Bearbeitung keine Notwendigkeit, den Anpressdruck auch in Z-Richtung des Werkzeugs konstant zu halten.

Wenn man ein Ultraschall-Bearbeitungswerkzeug nicht entlang einer Innen- oder Aussenkontur verfahren will, sondern das Ziel die Bearbeitung oder Erstellung einer ganz bestimmten Werkstückoberfläche ist, wobei die fertige Oberfläche gewissermassen den «Abdruck» der «anliegenden» Fläche des Bearbeitungswerkzeuges darstellt, so wird letzteres in Z-Richtung zugestellt. Die bearbeitete Fläche des Werkstoffs oder Werkstücks ist dabei um ein Vielfaches grösser als beim Umriss-Bearbeiten mit einem messerartigen Ultraschall-Bearbeitungswerkzeug. Infolgedessen ist auch die Zustellbewegung des Bearbeitungswerkzeuges erheblich langsamer als beim vorbekannten Verfahren. Dasselbe gilt, wenn das Bearbeitungswerkzeug den Werkstoff oder das Werkstück vollständig durchdringen soll, um beispielsweise einen Durchbruch zu erstellen, dessen Umriss demjenigen des freien Endes des Bearbeitungswerkzeugs entspricht. Um beispielsweise im letztgenannten Falle eine absolut glatte Kontur des Durchbruchs zu erhalten, muss der Bearbeitungsdruck mit höchster Präzision konstant gehalten werden. Unmittelbar an der Bearbeitungsstelle kann dieser Druck aber nicht erfasst werden. Dies ist auch beim vorbekannten Verfahren nicht anders. Dort wird der Druck relativ weit weg von der Bearbeitungsstelle erfasst und dieser Wert wird dazuhin noch von der Ultraschallschwingung überlagert. Letztere muss anschliessend wieder herausgefiltert werden, und dies führt insgesamt zu einer hohen und höchsten Ansprüchen nicht genügenden «Konstanthaltung» des Anpressdrucks.

Die Aufgabe der Erfindung wird infolgedessen darin gesehen, das Verfahren der eingangs beschriebenen Art so weiterzubilden, dass der Auflagedruck mit höherer Genauigkeit aufrechterhalten werden kann und zugleich eine Vorrichtung zu schaffen, mit welcher sich dieses Verfahren durchführen lässt.

Zur Lösung dieser Aufgabe wird ein Verfahren gemäss dem Oberbegriff des Anspruches 1 vorgeschlagen, welches entsprechend dem kennzeichnenden Teil dieses Anspruchs ausgestaltet ist. Bei diesem Verfahren wird auf eine indirekte Erfassung des Anpressdruckes verzichtet und statt dessen die Zustellbewegung des Bearbeitungswerkzeugs erfasst. Sie muss nicht unbedingt am Werkzeug selbst abgenommen werden, vielmehr kann man jedes fest damit verbundene Vorrichtungselement, insbesondere die das Bearbeitungswerkzeug tragende Pinole, heranziehen. Der erfasste Wegwert kann über einen geeigneten Umsetzer in einen Druckwert umgesetzt werden. Letzterer bildet ein Mass, um welches man den hydraulischen oder pneumatischen Druck einer Vorschubeinrichtung für das Werkzeug korrigieren muss, damit der abgefallene Auflagedruck auf den Druck-Sollwert erhöht wird. Diese Vorgänge laufen in Bruchteilen von Sekunden ab, so dass eine Fein-Nachstellung mit unmerklichen Stufen entsteht, die man als kontinuierlich ansehen kann. Infolgedessen wird auch der Auflagedruck defacto konstant gehalten. Die Hilfskraft zur Betätigung der Vorschubeinrichtung ist in bevorzugter Weise ein hydraulischer oder pneumatischer Druck, jedoch kann es sich auch um eine andere bekannte Hilfskraft, beispielsweise eine magnetische Kraft handeln. Die hydraulische Belastung der Pinole bietet sich in besonderem Masse an, weil das hydraulische Medium inkompressibel und die Druckregelung infolgedessen problemlos exakt durchführbar ist.

Wenn davon ausgegangen wird, dass sich eine Zustellbewegung des Bearbeitungswerkzeuges gegen das Werkstück oder den Werkstoff in einer Verschiebebewegung und damit einer Vergrösserung des Druckbeaufschlagungsraums der Vorschubeinrichtung äussert, so lässt sich die Konstanthaltung des Anpressdruckes des Bearbeitungswerkzeugs auf zweierlei Weise erreichen. Entweder man füllt eine der Vergrösserung des Druckbeaufschlagungsraums entsprechende Mediummenge nach oder man hält die Grösse des

2

Druckbeaufschlagungsraums, d.h. dessen Sollvolumen konstant. Die zweitgenannte Methode ist aus verschiedenen Gründen recht vorteilhaft, insbesondere auch bei grosser Zustellbewegung des Bearbeitungswerkzeuges während der gesamten Bearbeitung. Diese Methode zeichnet sich im übrigen durch besonders hohe Präzision aus.

Eine weitere Ausgestaltung der Erfindung sieht vor, dass der Wegwert des Wegaufnehmers in einer Vergleichsvorrichtung mit einem Positions-Sollwert, dem Wegaufnehmer-Nullbezugspunkt, verglichen wird, dass ein Differenzwert der Vergleichsvorrichtung einem Regler übermittelt wird und durch letzteren die hilfskraftgesteuerte Vorschubeinrichtung, insbesondere der Zylinder od. dgl. der pneumatischen oder hydraulischen Vorschubeinrichtung im Sinne einer Wiederherstellung eines Soll-Volumens im Zylinder od. dgl. verschoben wird. Die mit dem Eindringen des Bearbeitungswerkzeugs in den Werkstoff oder das Werkstück verbundene Druckänderung im hilfskraftgesteuerten Vorschubsystem, im Zylinder od. dgl. wird hierbei durch eine Veränderung des Ist-Volumens bis zum Erreichen des Soll-Volumens und damit auch des pneumatischen Soll-Drucks od. dgl. kompensiert. Wenn letzterer erreicht ist, stimmt auch der Anpressdruck des Bearbeitungswerkzeugs an der Bearbeitungs-Oberfläche wieder.

Eine andere Variante der Erfindung kennzeichnet sich dadurch, dass der Wegwert des Wegaufnehmers in einer Vergleichsvorrichtung mit einem Weg-Sollwert verglichen wird, dass ein Differenzwert der Vergleichsvorrichtung einem Regler übermittelt wird und durch letzteren bei pneumatischer oder magnetischer Hilfskraft die hilfskraftgesteuerte Vorschubeinrichtung, der Zylinder od. dgl. der pneumatischen oder hydraulischen Vorschubeinrichtung im Sinne einer Wiederherstellung eines Soll-Drucks im Druckzylinder od. dgl. verschoben wird. Wenn beim Eindringen des Bearbeitungswerkzeugs in das Werkstück oder den Werkstoff der Druck im Zylinder od. dgl. der pneumatischen oder hydraulischen Vorschubeinrichtung absinkt, so wird er durch Nachfüllen von Druckmedium auf den Sollwert gebracht, wobei sich die Menge des nachzufüllenden Mediums nach dem Betrag der Volumenänderung im Belastungsdruckraum des Druckzylinders od. dgl. richtet. Der Vorgang bei der Feinregulierung des Solldruckes bzw. des Sollvolumens läuft stetig oder zumindest in etwa stetig ab, so dass der Anpressdruck des Bearbeitungswerkzeugs am Werkstoff oder Werkstück als konstant angesehen werden kann.

Falls der Anpressdruck des Bearbeitungswerkzeugs pneumatisch aufgebracht wird, so kann man eine Druckerhöhung in sehr vorteilhafter Weise auf dreierlei Arten erreichen. Entweder man erhöht den Druck im Druckzylinder od. dgl. durch Zuführen weiterer Pressluft, oder aber man verschliesst das pneumatische System, so dass sich eine Druckerhöhung durch Verringerung des Volumens im Druckzylinder od. dgl. einstellt. Eine dritte Möglichkeit besteht darin, dass man in den Druckzylinder od. dgl. ein flüssiges Medium, beispielsweise Öl, einfüllt, wodurch sich der für die Druckluft zur Verfügung stehende Raum verringert, was ebenfalls zu einem Druckanstieg führt. Letzteres ist insofern noch besonders vorteilhaft, als sich hier bei geringen Wegänderungen ein grosser positiver Druckgradient ergibt.

Eine weitere Ausbildung der Erfindung kennzeichnet sich dadurch, dass das Differenzsignal der Vergleichsvorrichtung unter Berücksichtigung der mechanischen Eigenresonanz sowie des Verlaufs des Druckgradienten in der Regelstrecke verstärkt und geformt wird, um ein angepasstes Differenzsignal für einen Regelverstärker zu bilden. Mit dieser «Aufbereitung» des vom Wegaufnehmer kommenden Signals erfolgt zugleich auch eine Verstärkung. Die Vergleichsvorrichtung berücksichtigt auch die Variation des Nullbezugspunkts des Wegaufnehmers.

Eine weitere Variante der Erfindung kennzeichnet sich dadurch, dass das angepasste Differenzsignal im Regelverstärker in Abhängigkeit von der aktuellen Phase der Bearbeitung in seinem Zeitverhalten variiert und anschliessend von einem Signal des Zyklus einer Suspensionszuführung für die Bearbeitung und Kühlung überlagert wird, wobei das hierdurch gebildete optimierte Differenzsignal an den Regler, insbesondere einen Vier-Quadranten-Servoregler, weitergeleitet wird. Dieses optimierte Differenzsignal berücksichtigt alle für ein sehr präzises Konstanthalten des Sollvolumens oder Solldrucks in der hilfskraftgesteuerten Vorschubeinrichtung, im Zylinder od. dgl. der hydraulischen oder pneumatischen Vorschubeinrichtung für das Werkstück massgeblichen Grössen, so dass man den Anpressdruck des Bearbeitungswerkzeuges auf dem Werkstoff oder Werkstück mit höchster Präzision konstant halten kann.

Eine andere Ausführungsform der Erfindung ist dadurch gekennzeichnet, dass der Wegwert des Wegaufnehmers einer Vorschubeinrichtung für die Konstanthaltung eines Soll-Volumens oder Soll-Drucks in der hilfskraftgesteuerten Vorschubeinrichtung, im Zylinder od. dgl. der pneumatischen oder hydraulischen Vorschubeinrichtung unmittelbar übermittelt wird. Hierbei müssen der Wegaufnehmer und die Vorschubeinrichtung so ausgebildet und aufeinander abgestimmt sein, dass im Falle der Regelung des Soll-Volumens dieser unmittelbare Vorschub des Vorschubkopfs od. dgl. möglich ist. Beispielsweise kann ein elektronischer Vorschubmotor für den Vorschubkopf od. dgl. direkt durch einen elektrischen Wegaufnehmer gesteuert werden. Über eine Verschiebebewegung des Vorschubkopfes od. dgl. kann auch der Soll-Druck geregelt werden.

Eine andere Variante der Erfindung ergibt sich aus Anspruch 8. Dieses Verfahren sieht vor, dass bei magnetischer Vorschubbewegung des Werkzeuges und bei konstanter magnetischer Kraft die Zustellbewegung beim Eindringen des Bearbeitungswerkzeuges in den Werkstoff oder das Werkstück mittels eines Wegaufnehmers erfasst und in einen Nachstellwert umgesetzt wird, der die magnetische Vorschubeinrichtung dem Wert der Eindringtiefe entsprechend nachführt.

Eine weitere Variante der Erfindung geht aus Anspruch 9 hervor. Bei diesem Verfahren mit magnetischer Vorschubbewegung wird die Zustellbewegung beim Eindringen des Bearbeitungswerkzeuges in den Werkstoff oder das Werkstück mittels eines Wegaufnehmers erfasst und in einen solchen Nachstellwert umgewandelt, der den Translator im Sinne einer Wiederherstellung des Werkzeugsolldruckes beaufschlagt.

Eine weitere Ausgestaltung der Erfindung ist im Anspruch 10 beschrieben. Bei diesem Verfahren mit magnetischer Vorschubbewegung des Werkzeugs wird der zwischen Stator und Translator herrschenden Magnetfluss mittels eines Magnetfluss-Aufnehmers erfasst und in einem Vergleicher mit einem Magnetfluss-Sollwert verglichen, wobei der Differenzwert des Vergleichers einem Regler übermittelt und durch letzteren der Translator der magnetischen Vorschubeinrichtung im Sinne einer Wiederherstellung eines Sollauflagedruckes des Werkzeuges auf das Werkstück beaufschlagt wird.

Zur Lösung dieser Aufgabe wird erfindungsgemäss ausserdem vorgeschlagen, dass eine Vorrichtung gemäss dem Oberbegriff des Anspruchs 11 entsprechend dem kennzeichnenden Teil dieses Anspruchs ausgebildet ist. Durch den Verzicht auf irgendwelche Zwischenglieder und die unmittelbare Zuordnung einer von einem Wegaufnehmer steuerbaren Vorschubeinrichtung vermeidet man Übertragungsfehler beim Regeln des Anpressdrucks. Aufgrund der Anordnung des Wegaufnehmers zwischen einem in Richtung der Pinolenachse nachstellbaren Vorschubkopf und der Pinole erfasst man auch die aktuelle Werkzeugabnützung. Mit Hilfe des Vorschubkopfes kann man das Bearbeitungswerkzeug gegenüber den unterschiedlich grossen bzw. hohen Werkstücken vornehmen und andererseits auch eine rasche Suspensionsspülung bewirken. Bekanntlich wird bei der Ultraschallbearbeitung das erodierte Material mit Hilfe einer Suspension fortlaufend weggespült, wobei die Suspension zwischen Bearbeitungswerkzeug und aktueller Bearbeitungsstelle von Zeit zu Zeit in einem Spülvorgang entfernt bzw. erneuert werden muss.

Der Wegaufnehmer kann unmittelbar am Vorschubkopf oder an einem fest damit verbundenen Bauteil gehalten sein. Dementsprechend ist es auch gleichwertig, wenn sein Tastelement unmittelbar an der Pinole anliegt oder an einem mit letzterer mitbewegten Teil. Des weiteren ist es zumindest vom Prinzip her möglich, im Sinne der vorstehenden Ausführungen den Wegaufnehmer an der Pinole zu befestigen und sein Tastelement am Vorschubkopf od. dgl. anliegen zu lassen. Wichtig ist lediglich, dass die Pinole od. dgl. gegenüber dem Vorschubkopf eine Realtivverschiebung durchführt, deren Grösse präzise erfasst und als entsprechend umgewandeltes Signal an die Vorschubeinrichtung weitergeleitet wird, welche eine dem gemessenen Wegwert entsprechende Korrektur in dem Sinne vornimmt, dass der Anpressdruck des Werkzeugs am Werkstück od. dgl. wieder auf den Sollwert gebracht wird.

Eine Weiterbildung der Erfindung sieht vor, dass sich am freien Ende der Pinole ein Ultraschallwandler befindet, an dem ein Ultraschalltransformator befestigt ist, der seinerseits das Bearbeitungswerkzeug trägt. Zumindest der Ultraschallwandler und der Ultraschalltransformator können von herkömmlicher Bauart sein, so dass eine nähere Erläuterung ihrer Konstruktion und Wirkungsweise entbehrlich ist. Auch das Bearbeitungswerkzeug kann, wenigstens dem Prinzip nach, gleich oder ähnlich den bekannten Ausführungen sein, wobei sich die genaue Form nach dem jeweiligen Verwendungszweck richtet.

Eine besonders bevorzugte Ausführungsform der Erfindung sieht vor, dass der Wegaufnehmer ein am Vorschubkopf befestigter induktiver Wegaufnehmer ist, dessen Taststift od. dgl. Fühlelemente am Ultraschallwandler anliegt. Das liegt vor allen Dingen daran, dass sich der Ultraschallwandler in einem relativ geringen Abstand vom Vorschubkopf befindet, so dass der Wegaufnehmer klein gehalten werden kann.

In weiterer Ausgestaltung der Erfindung wird vorgeschlagen, dass das vom Bearbeitungswerkzeug abgewandte Ende der Pinole mit einer Membrane oder einem Kolben einer Druckkammer der Vorschubeinrichtung verbunden ist. Der Druck in der Druckkammer wird auf einem konstanten Wert gehalten, so dass bei Konstanthaltung der übrigen Grössen sowie sich bewegender Pinole der Anpressdruck den vorgegebenen Wert beibehält. Wenn im Verlauf der Bearbeitung die Pinole verschoben wird, erfolgt auf geeignete Art, beispielsweise durch Nachfahren des Vorschub-Kopfs, eine Korrektur dieser Relativbewegung. Diese Vorgänge laufen bei einem entsprechend ausgebildeten Regler bzw. Regelsystem sowie Stellmotor und Stellantrieb kontinuierlich ab, so dass der Anpressdruck des Bearbeitungswerkzeugs innerhalb des Pinolenhubbereichs quasi konstant ist.

Eine andere Ausbildung der Erfindung sieht vor, dass die Druckkammer durch einen pneumatischen oder hydraulischen Zylinder gebildet ist. Bei letzterem handelt es sich in bevorzugter Weise um eine doppeltwirkende Ausführung, wobei die beiden durch die Membrane oder den Kolben voneinander getrennten Zylinderräume vorzugsweise mit unterschiedlichen Drücken beaufschlagt sind. Die Anordnung kann man beispielsweise so treffen, dass ein erster Druck einen ersten Zylinderraum, insbesondere Zylinder-Ringraum, mit einem Druck P 2 beaufschlagt, welcher das Gewicht der Pinole mit allen daran befestigten Teilen kompensiert, so dass die Auflagekraft des Bearbeitungswerkzeugs auf der Oberfläche des zu bearbeitenden Werkstoffs oder Werkstücks den Wert Null annimmt. Das in den zweiten Zylinderraum eingeleitete, unter einem Druck P1 stehende Medium, ermöglicht dann in einfacher Weise die exakte Bestimmung und gegebenenfalls auch Variierung des Anpressdrucks des Bearbeitungswerkzeuges. Die beiden Drücke können, wie gesagt, unterschiedlich gross sein und in der Regel sind sie es auch.

Die Pinole ist vorteilhafterweise mittels einer Kugelumlaufbahn bzw. einem Kugelrollkäfig oder einer ähnlichen Einrichtung verschiebbar im Vorschubkopf od. dgl. geführt, so dass an dieser Stelle keine nennenswerte Reibung zu verzeichnen ist.

Gemäss einer besonders bevorzugten Ausführungsform der Erfindung wird vorgeschlagen, dass der Wegaufnehmer mit einem Oszillator-Demodulator verbunden ist, der seinerseits mit einem Vergleicher verbunden ist, welcher mit einem Servo-Regler, insbesondere Vier-Quadranten-Servoregler, in Verbindung steht, wobei der Servoregler mit einem Antriebsmotor für die Vorschubbewegung des Vorschubkopfes od. dgl. verbunden ist, und dass der Antriebsmotor über einen Tachometer mit dem Servo-Regler in Verbindung steht. Der Wegwert wird also in Form eines Wegsignals an den Oszillator und Demodulator weitergegeben, von dem aus ein dem Relativwert proportionales Signal an den Servoregler weitergeleitet wird. Letzterer veranlasst eine Arbeitsbewegung des Motors um einen diesem Signal entsprechenden Betrag, wobei die Ausführungsgeschwindigkeit über den Tachometer vom Servoregler überwacht wird. Der Tachometer liefert zu diesem Zweck eine entsprechende Tachometerspannung an den Servoregler. «Verbunden» wird hier und auch nachstehend im Sinne von «elektrisch leitend verbunden» verstanden, wenn Regler, Stellmotor etc. elektrisch betriebene Vorrichtungen sind.

In Weiterbildung der Erfindung wird vorgeschlagen, dass der Oszillator-Demodulator über eine Vergleichsvorrichtung mit einem nachgeschalteten ersten Regelverstärker mit dem Servo-Regler verbunden ist, wobei diese Vergleichsvorrichtung zusätzlich noch mit einer Vorrichtung zur Erzeugung eines Sollwertsignals, d.h. der Einstellung des Wegaufnehmer-Nullbezugspunktes in Verbindung steht. Die Vergleichsvorrichtung stellt demnach den einstellbaren Sollwert, d.h. den Taster-Nullbezugspunkt dem dem relativen Wegwert proportionalen Signal gegenüber und gibt ein angepasstes Differenzsignal an den Servoregler weiter. Dabei ist in weiterer Ausgestaltung der Erfindung vorgesehen, dass die Vergleichsvorrichtung mit nachgeschaltetem erstem Regelverstärker nicht direkt, sondern indirekt über einen zweiten Regelverstärker mit dem Servoregler verbunden ist, wobei der zweite Regelverstärker mit je einem Signalgeber für den Zyklus der Suspensionszuführung und die Optimierung der aktuellen Phase der Bearbeitung verbunden ist. Dem zweiten Regelverstärker wird ein Signal über die aktuelle Phase der Bearbeitung übermittelt, um das angepasste Differenzsignal vom ersten Regelverstärker in seinem Zeitverhalten zu variieren, und anschliessend wird auch noch ein Signal des Zyklus der Suspensionszuführung überlagert, so dass letztlich den zweiten Verstärker ein optimiertes Differenzsignal verlässt, welches unmittelbar dem Servoregler zugeleitet wird.

Über das optimierte Differenzsignal wird der Antrieb des Vorschubkopfes od. dgl. so gesteuert, dass der eingestellte Druck in dem genannten Zylinderraum oder das Soll-Volumen des letzteren und damit die Auflagekraft konstant gehalten wird.

Der Sollwert wird mit Hilfe des Sollwerteinstellers manuell eingestellt.

Eine weitere Ausgestaltung der Erfindung ergibt sich aus Anspruch 21. Die Pinole ist mit einer Arretiervorrichtung versehen, die ihrerseits, ebenso wie der zweite Regelverstärker, mit einem Signalgeber verbunden ist. Wenn im Verlauf der Bearbeitung das Werkzeug durch eine Rückfahrbewegung der Vorschubeinheit zum Zweck der Suspensionszuführung vom Werkstück abgehoben wird, blockiert die Arretiervorrichtung während dieser Zeit eine Pinolenbewegung, die infolge des Fehlens der vom Werkstück auf das Werkzeug ausgeübten Gegenkraft einsetzen würde, so, dass unmittelbar nach Beendigung des Abhebevorganges ein Weiterarbeiten mit Solldruck erfolgen kann.

Andere Ausbildungen der Erfindung gehen aus den Ansprüchen 22 bis 26 hervor. Der Signalgeber ist mit dem zweiten Regelverstärker, des weiteren mit einer Zusatz-Arretierungsvorrichtung für den Vorschubkopf und mit einer absperrbaren By-pass-Leitung verbunden. Diese Ausführungsform ermöglicht im Gegensatz zur vorhergehenden eine Abhebebewegung des Werkzeuges bei arretierter Vorschubeinrichtung mit nicht arretierter Pinole durch Überhöhung des Druckes P2 im Zylinderraum während der Öffnungszeit der By-pass-Leitung bei gleichzeitiger Aktivierung der Zusatz-Arretierungsvorrichtung und Reduzierung des Druckes P1 im Zylinderraum mittels der zweiten einstellbaren Druckregelvorrichtung.

Eine weitere Ausgestaltung der Erfindung entnimmt man Anspruch 26. Im Zylinderraum ist ein Druckaufnehmer installiert, der seinerseits mit einem Druckvergleicher verbunden ist, welcher einerseits mit einem Drucksollwertgeber, und andererseits mit einem Druckregelverstärker verbunden ist, der seinerseits mit einer Druckregelvorrichtung in Verbindung steht. Der Druckistwert wird im Zylinderraum direkt aufgenommen und als direkter Druckistwert dem Druckvergleicher zugeführt, der den Druckistwert mit dem Drucksollwert vergleicht und aus der Differenz beider Werte ein Druckdifferenzsignal zur Weiterleitung an den Druckregelverstärker bildet. Letzterer bereitet das Druckdifferenzsignal auf und wandelt es in das Druckstellsignal für die zweite einstellbare Druckregelvorrichtung um. Die Druckregelvorrichtung verändert den Istdruck im Zylinderraum im Sinne der Wiederherstellung des Solldruckes.

Nachfolgend wird die Erfindung anhand der Zeichnung näher erläutert. Hierbei stellen dar:

Figur 1 schematisch die an einem Vorschubkopf verschiebbar gelagerte Pinole mit dem Bearbeitungswerkzeug,

Figur 2 ein Blockschaltbild einer pneumatischen oder hydraulischen Auflagedruckregelung des Bearbeitungswerkzeugs,

Figur 3 ein die Fig. 2 erweiterndes Blockschaltbild dreier Versionen einer magnetischen Auflagedruckregelung des Bearbeitungswerkzeugs.

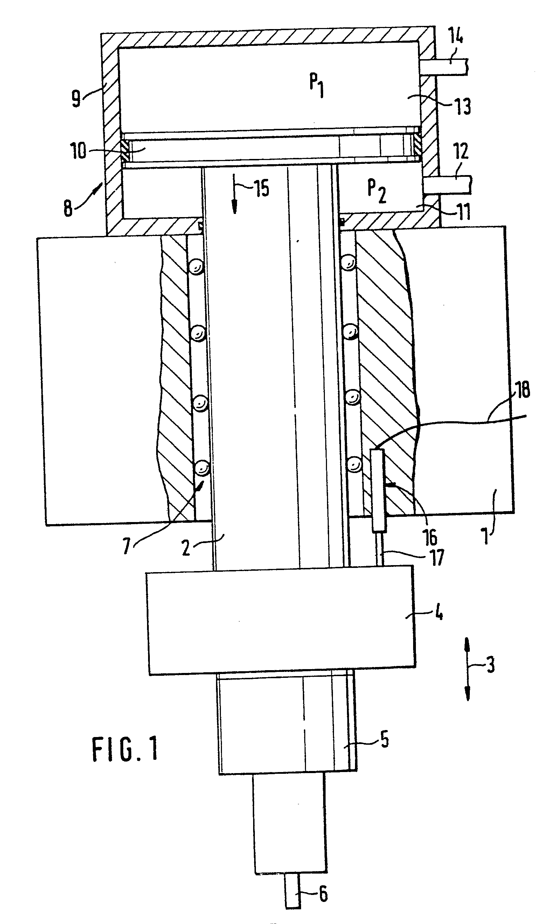

An einem Vorschubkopf 1 ist einer nicht näher dargestellten Ultraschall-Bearbeitungsmaschine ist eine Pinole 2 im Sinne des Doppelpfeils 3 auf und ab verschiebbar gelagert. An dem in Fig. 1 unteren Ende trägt die Pinole 2 einen Ultraschallwandler 4 bekannter Bauart. Daran schliesst sich nach unten hin ein Ultraschalltransformator 5, vielfach auch «Rüssel» genannt, an, der mit dem Ultraschall-Bearbeitungswerkzeug 6 verbunden ist. Letzteres wird erfindungsgemäss mit konstantem Druck gegen den zu bearbeitenden Werkstoff oder ein Werkstück gepresst, wobei es sich insbesondere um Ultrahartwerkstoff, wie beispielsweise Keramik, handelt, dessen Härte nahezu diejenige eines Diamanten erreicht. Zur reibungsarmen verschiebbaren Lagerung ist zwischen Pinole 2 und Vorschubkopf 1 ein Kugelrollkäfig 7 vorgesehen.

An dem vom Bearbeitungswerkzeug 6 abgewandten Ende der Pinole 2 befindet sich eine Vorschubeinrichtung 8, die hydraulisch oder pneumatisch arbeitet. Sie sorgt für den konstanten Anpressdruck des Bearbeitungswerkzeugs 6 am Werkstück oder Werkstoff. Beim Ausführungsbeispiel handelt es sich um einen doppeltwirkenden hydraulischen oder pneumatischen Zylinder 9 mit Kolben 10. Dem ringförmigen Zylinderraum 11 wird Druckmedium über den ersten Anschluss 12 und eine erste Druckregelvorrichtung 46 zugeführt. Über einen zweiten Anschluss 14 und eine zweite Druckregelvorrichtung 48 wird der Zylinderraum 13 unter Druck gesetzt. Der Druck im Zylinderraum 11 ist so gross, dass die abwärts gerichtete Kraft aus dem Gewicht der Pinole 2 samt allen daran befestigten Teilen einschliesslich des Kolbens 10 kompensiert wird, so dass bei fehlendem Druck im Zylinderraum 13 das Bearbeitungswerkzeug 6 selbst bei einer Berührung mit dem zu bearbeitenden Werkstoff oder Werkstück keine Druckkraft auf letzteres ausübt.

Eine definierte Druckkraft erreicht man durch nachfolgendes Einleiten von Druckmedium in den Zylinderraum 13.

Wenn es sich bei dem Druckmedium um Druckflüssigkeit handelt, also eine hydraulisch arbeitende Vorschubeinrichtung vorliegt, und man mit sogenanntem «offenem System» arbeitet, so kann man einen ganz bestimmten Wert für die Anpresskraft des Bearbeitungswerkzeugs 6 dadurch erreichen, dass man einen definierten Druck für den Zylinderraum 13 vorgibt.

Wenn das Bearbeitungswerkzeug 6 im Verlaufe der Bearbeitung in das Werkstück od. dgl. eindringt, so verschiebt sich mit der Pinole 2 zugleich auch der Kolben 10 in Pfeilrichtung 15. Infolgedessen vergrössert sich das Volumen des Zylinderraums 13 und der Druck nimmt ab. Nachdem letzterer jedoch erfindungsgemäss konstant gehalten werden soll, muss diese Vergrösserung des Volumens des Zylinderraumes 13 verhindert werden.

Zu diesem Zweck befindet sich am Vorschubkopf 1 ein Wegaufnehmer 16 mit einem Tastorgan 17. Vorzugsweise handelt es sich um einen induktiv arbeitenden Wegaufnehmer. Das freie Ende des Tastorgans 17 liegt beispielsweise auf dem Ultraschallwandler 4 auf. Zunächst wird ein Nullbezugspunkt eingestellt, der dem Sollvolumen des Zylinderraumes 13 zugeordnet ist. Sobald sich die Pinole 2 im Sinne des Pfeils 15 verschiebt, gibt der Wegaufnehmer 16 ein dieser Wegstrecke bzw. dem Wegwert entsprechendes Signal an eine Auflagedruck-Regelvorrichtung, die nachfolgend noch beschrieben wird. Die Übermittlung dieses Signals erfolgt über die elektrische Leitung 18.

Dieser Wegwert wird insbesondere unter Berücksichtigung weiterer Systemwerte in ein Steuersignal für einen Vorschubmotor umgewandelt, der den Vorschubkopf 1 ebenfalls im Sinne des Pfeils 15 um den Betrag verschiebt, um den sich die Pinole 2 mit dem Bearbeitungswerkzeug 6 nach unten verschoben hat. Aufgrund seiner festen Verbindung mit dem Zylinder 9 der Vorschubeinrichtung 8 wird das Volumen des Zylinderraumes 13 wieder auf den Sollwert gebracht. Damit ist dann auch am Wegaufnehmer 16 wieder die Nullstellung erreicht.

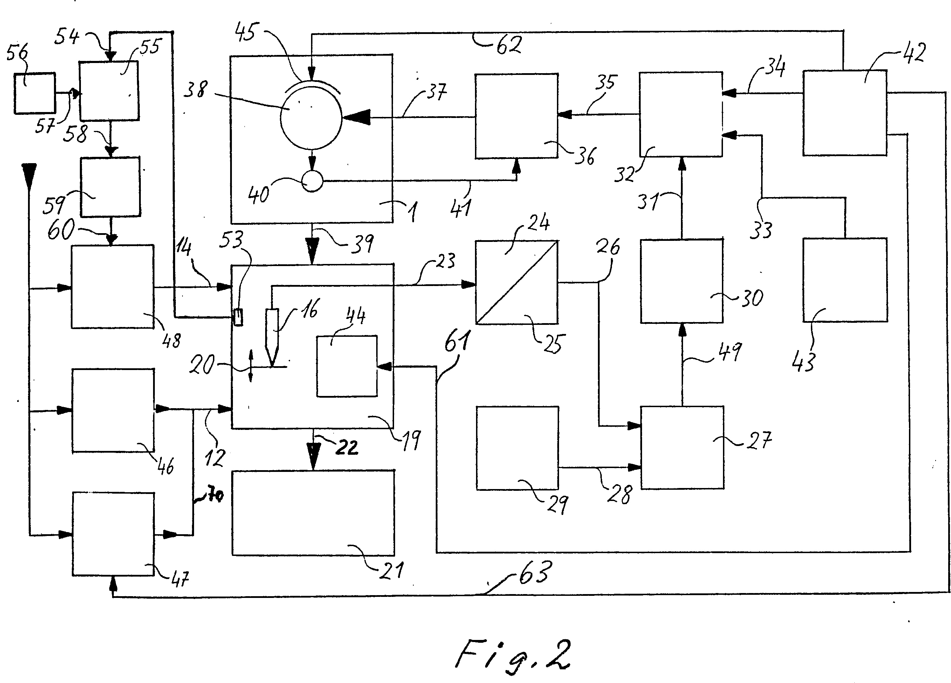

Anhand des Blockschaltbildes der Fig. 2 wird nachstehend die Regelung des Auflagedruckes zunächst für das sogenannte «offene System», bei welchem mit konstantem Volumen im Zylinderraum 13 gearbeitet wird, näher erläutert.

Der Block 19 stellt symbolisch die Vorschubeinrichtung 8 dar. Mit dieser wirkt der Wegaufnehmer 16 in der geschilderten Weise zusammen. Zu letzterem gehört eine Vorrichtung zum Einstellen des Taststift-Auflageniveaus 20. Der Schwingerkombination 21, bestehend aus dem Ultraschallwandler 4, dem Ultraschalltransformator 5 sowie dem Ultraschallbearbeitungswerkzeug 6, wird ein Vorschub mit konstantem Auflagedruck am zu bearbeitenden Werkstück oder Werkstoff vermittelt, der durch den Pfeil 22 symbolisiert ist.

Der Wegaufnehmer 16 übermittelt bei einer zurückgelegten Wegstrecke des Ultraschall-Bearbeitungswerkzeuges 6 ein der aktuellen Pinolen-Absolutposition entsprechendes Wegwert-Signal 23 an den Oszillator 24 mit Demodulator 25. Aus letzterem geht ein der Pinolen-Absolutposition proportionales Signal 26 an einen Vergleicher 27, der seinerseits ein dem Relativweg der Pinole proportionales Signal über die Leitung 49 an den nachgeschalteten ersten Regelverstärker 30 liefert. Der Vergleicher 27 erhält ein Sollwertsignal 28, mit dem der Wegaufnehmer-Nullbezugspunkt eingestellt wird. Es stammt aus der Einstelleinrichtung 29. Den ersten Regelverstärker 30 verlässt ein angepasstes Differenzsignal 31, welches einem zweiten Regelverstärker 32 zugeführt wird. Diesem werden ausserdem noch ein Signal 33 aus der Optimierung der aktuellen Phase der Bearbeitung sowie ein Signal 34 aus dem Zyklus der Suspensionszuführung zugeleitet. Diese drei Werte ergeben zusammen ein optimiertes Differenzsignal 35, welches an einen Vier-Quadranten-Servoregler 36 weitergeleitet wird. Letzterer ist über eine Leitung 37 mit einem Vorschubmotor 38 für den Vorschubkopf 1 verbunden. Der Motor 38 bewirkt eine Vorschubbewegung 39 des doppeltwirkenden Zylinders 9 relativ zur Pinole 2 und dem Bearbeitungswerkzeug 6. Sie endigt dann, wenn der Wegaufnehmer 16 ein dem Nullbezugspunkt entsprechendes Signal abgibt. Diese Relativverschiebung des Zylinders 9 bewirkt eine Wiederherstellung des Sollvolumens im Zylinderraum 13. Die Bewegungsgeschwindigkeit des Motors 38 wird über einen Tachometer 40, der eine entsprechende Tachometerspannung 41 liefert, an den Vier-Quadranten-Servoregler 36 gemeldet.

Im Zylinderraum 13 herrscht der Druck P1, während der Druck im Zylinderraum 11 mit P2 bezeichnet ist. Letzterer kompensiert, wie bereits erläutert, das Gewicht aller verschiebefest mit dem Bearbeitungswerkzeug 6 verbundenen Teile, so dass der Druck P1 für das Anpressen des Bearbeitungswerkzeugs an das Werkstück oder den Werkstoff allein massgebend ist.

Eine direkte Messung des Drucks P1 im Zylinderraum 11 wird vom Druckaufnehmer 53 vorgenommen. Letzterer übermittelt den Wert des aktuellen Istdrucks P1 dem Druckvergleicher 55, der ihn mit dem am Sollwerteinsteller 56 eingestellten Sollwert 57 des Druckes P1 vergleicht und bei vorliegender Differenz beider Werte 54 und 57 ein Druckdifferenzsignal 58 bildet, das der Druckregelverstärker 59 zu einem Druckstellsignal 60 aufbereitet, welches durch die zweite einstellbare Druckregelvorrichtung 48 eine zusätzliche Feinregulierung des Druckes P1 vornimmt.

Wird während der Bearbeitungszeit das Werkzeug zum Zwecke der besseren Suspensions-Zuführung auf die Bearbeitungsfläche kurzzeitig vom Werkstück abgehoben, so kann dieser Vorgang auf zweierlei Weise durchgeführt werden. Zum einen durch kurzzeitiges Arretieren der Pinole 2 mittels der Arretiervorrichtung 44 bei gleichzeitiger Durchführung einer kurzzeitigen Rückfahr- und Wiederzustellbewegung des Vorschubkopfes 1 mittels des Antriebmotors 38, zum andern wird diese Abhebe- und Wiederzustellbewegung durchgeführt, indem gleichzeitig der Vorschubkopf mittels der Zusatzarretiervorrichtung 45 arretiert, der Druck P1 mittels der einstellbaren zweiten Druckregelvorrichtung 48 vermindert und der Druck P2 mittels der abschaltbaren By-pass-Leitung 70 erhöht wird. Durch geeignete Wiederherstellung der Sollbedingungen für den Bearbeitungsvorgang wird dieser wieder fortgesetzt.

Beim Arbeiten mit «geschlossenem System» wird dem Vergleicher 27 ein Sollwertsignal 28 als Vorgabe, die den Wegaufnehmer-Nullbezugspunkt bildet, zugeführt. Dieser Sollwert bestimmt den im Zylinderraum 13 herrschenden Kompressionsdruck.

Bei geschlossenem System wird das optimierte Differenzsignal 35 dazu benutzt, über den Vier-Quadranten-Servoregler 36 den Kompressionsdruck im Zylinderraum 13 wieder auf den Sollwert zu bringen bzw. konstant zu halten. Weitere grundsätzliche Unterschiede zwischen dem geschlossenen und offenen System sind nicht vorgesehen.

Wird zum Zwecke der besseren Suspensions-Zuführung auf die Bearbeitungsfläche das Werkzeug während der Bearbeitungszeit kurzzeitig vom Werkstück abgehoben, kann dieser Vorgang bei «geschlossenem System» im Gegensatz zum «offenen System» nur in der einen Weise durchgeführt werden, dass die Pinole 2 kurzzeitig mittels der Arretiervorrichtung 44 arretiert wird und dass gleichzeitig der Vorschubkopf 1 eine Rückfahr- und Wiederzustellbewegung mittels des Vorschubmotors 38 durchführt. Die Fortsetzung des Bearbeitungsvorganges wird durch geeignete Wiederherstellung der Sollbedingungen für diesen bewirkt.

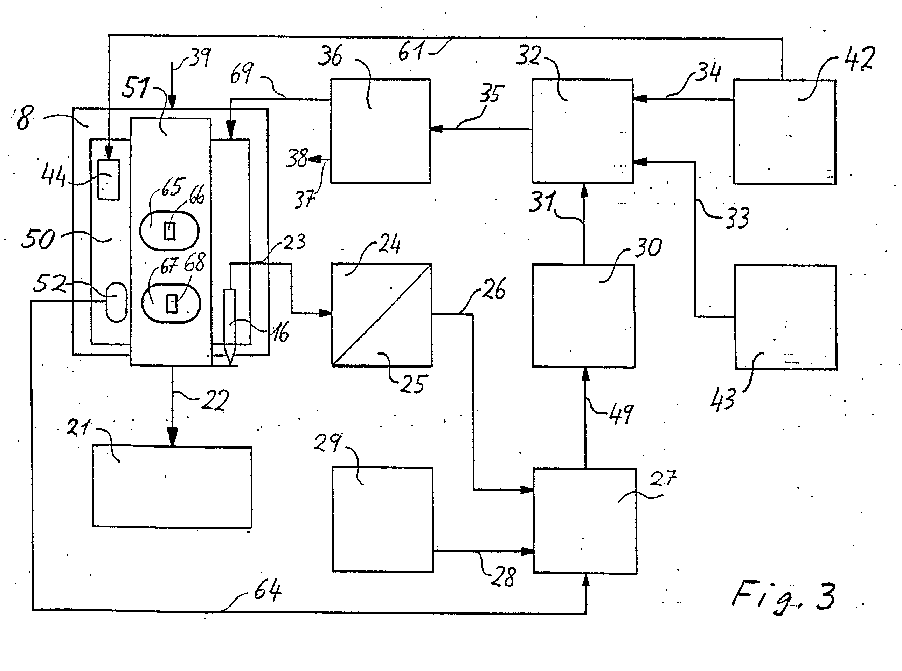

Soweit Fig. 3 mit Fig. 2 zusammenhängt, ist dies durch Verwendung gleicher Blockschaltbildlinien bzw. Linienteile sowie Bezugszahlen zum Ausdruck gebracht. An dem vom Bearbeitungswerkzeug 6 abgewandten Ende der Pinole 2 befindet sich bei der in Fig. 3 symbolisch dargestellten Version eine Vorschubeinrichtung 8, die magnetisch arbeitet. Sie sorgt für den konstanten Anpressdruck des Bearbeitungswerkzeugs 6 am Werkstück oder Werkstoff. Es handelt sich um ein doppeltwirkendes Magnetfeld 65 und 67, das auf den mit der Pinole verschiebefest verbundenen Translator wirkt. Die Induktion des Magnetfeldes 67 ist so gross, dass die abwärts gerichtete Kraft aus dem Gewicht der Pinole 2 samt allen daran befestigten Teilen einschliesslich des Translators kompensiert wird, so dass bei fehlender Induktion im Magnetfeld 65 das Bearbeitungswerkzeug 6 selbst bei einer Berührung mit dem zu bearbeitenden Werkstoff oder Werkstück keine Druckkraft auf letzteres ausübt.

Eine definierte Druckkraft erreicht man durch nachfolgendes definiertes Steigern der Induktion im Magnetfeld 65.

Wenn das Bearbeitungswerkzeug 6 im Verlaufe der Bearbeitung in das Werkstück od. dgl. eindringt, so verschiebt sich mit der Pinole 2 zugleich auch der Translator 51 in Pfeilrichtung 15. Infolgedessen vergrössert sich der magnetisch wirksame Luftspalt im Magnetfeld 65, und die Induktion und damit auch die Druckkraft auf den Translator 51 nehmen ab. Nachdem die Druckkraft jedoch erfindungsgemäss konstant gehalten werden soll, muss diese Vergrösserung des magnetisch wirksamen Luftspalts im Magnetfeld 65 verhindert werden.

Zu diesem Zweck befindet sich am Vorschubkopf 1 ein Wegaufnehmer 16 mit einem Tastorgan 17. Vorzugsweise handelt es sich um einen induktiv arbeitenden Wegaufnehmer. Das freie Ende des Tastorgangs 17 liegt beispielsweise auf dem Ultraschallwandler 4 auf. Zunächst wird ein Nullbezugspunkt eingestellt, der dem magnetisch wirksamen Soll-Luftspalt im Magnetfeld 65 zugeordnet ist. Sobald sich die Pinole 2 im Sinne des Pfeils 15 verschiebt, gibt der Wegaufnehmer 16 ein dieser Wegstrecke bzw. dem Wegwert entsprechendes Signal an eine Auflagedruck-Regelvorrichtung, die nachfolgend noch beschrieben wird. Die Übermittlung dieses Signals erfolgt über die elektrische Leitung 18.

Dieser Wegwert wird insbesondere unter Berücksichtigung weiterer Systemwerte in ein Steuersignal für einen Vorschubmotor umgewandelt, der den Vorschubkopf 1 ebenfalls im Sinne des Pfeils 15 um den Betrag verschiebt, um den sich die Pinole 2 mit dem Bearbeitungswerkzeug 6 nach unten verschoben hat. Aufgrund seiner festen Verbindung mit dem Stator 50 der Vorschubeinrichtung 8 wird der magnetisch wirksame Luftspalt im Magnetfeld 65 wieder auf den Sollwert gebracht. Damit ist dann auch am Wegaufnehmer 16 wieder die Nullstellung erreicht.

Anhand des Blockschaltbildes der Fig. 3 wird nachstehend die Regelung des Auflagedrucks zunächst für den sogenannten «feststehenden Translator» bei welchem mit konstantem magnetisch wirksamen Luftspalt im Magnetfeld 65 gearbeitet wird. Der Block 8 stellt symbolisch die Vorschubeinrichtung 8 dar. Mit dieser wirkt der Wegaufnehmer 16 in der geschilderten Weise zusammen. Zu letzterer gehört eine Vorrichtung zum Einstellen des Taststift-Auflageniveaus 20. Der Schwingerkombination 21, bestehend aus dem Ultraschallwandler 4, dem Ultraschalltransformator 5 sowie dem Ultraschallbearbeitungswerkzeug 6, wird ein Vorschub mit konstantem Auflagedruck am zu beabeitenden Werkstück oder Werkstoff vermittelt, der durch den Pfeil 22 symbolisiert wird.

Der Wegaufnehmer 16 übermittelt bei einer zurückgelegten Wegstrecke des Ultraschall-Bearbeitungswerkzeugs 6, d.h. einer der aktuellen absoluten Pinolenposition entsprechendes Wegwert-Signal 23 an den Oszillator 24 mit Demodulator 25. Aus letzterem geht ein der absoluten Pinolenposition proportionales Signal 26 an einen Vergleicher 27, der seinerseits ein dem Relativweg der Pinole proportionales Signal 49 an den nachgeschalteten ersten Regelverstärker 30 liefert. Der Vergleicher 27 erhält ein Sollwertsignal 28, mit dem der Wegaufnehmer-Nullbezugspunkt eingestellt wird. Es stammt aus der Einstelleinrichtung 29. Den ersten Regelverstärker 30 verlässt ein angepasstes Differenzsignal 31, welches einem zweiten Regelverstärker 32 zugeführt wird. In diesen werden ausserdem noch ein Signal 33 aus der Optimierung der aktuellen Phase der Bearbeitung sowie ein Signal 34 aus dem Zyklus der Suspensions-Zuführung zugeleitet. Diese drei Werte ergeben zusammen ein optimiertes Differenzsignal 35, welches an einen Vier-Quadranten-Servoregler 36 weitergeleitet wird. Letzterer ist über eine Leitung 37 mit einem Vorschubmotor 38 für den Vorschubkopf 1 verbunden. Der Motor 38 bewirkt eine Vorschubbewegung 39 des Stators 50 relativ zum Translator 51 und damit auch zur Pinole 2 und dem Bearbeitungswerkzeug 6. Sie endigt dann, wenn der Wegaufnehmer 16 ein dem Nullbezugspunkt entsprechendes Signal abgibt. Diese Relativverschiebung des Stators 50 bewirkt eine Wiederherstellung des magnetisch wirksamen Soll-Luftspalts im Magnetfeld 65. Die Bewegungsgeschwindigkeit des Motors 38 wird über einen Tachometer 40, der eine entsprechende Tachometerspannung 41 liefert, an den Vier-Quadranten-Servoregler 36 gemeldet.

Im Magnetfeld 65 herrscht die Induktion B1, während die Induktion im Magnetfeld 67 mit B2 bezeichnet ist. Letztere kompensiert, wie bereits erläutert, das Gewicht aller verschiebefest mit dem Bearbeitungswerkzeug 6 verbundenen Teile, so dass die Induktion B1 für das Anpressen des Bearbeitungswerkzeugs an das Werkstück oder den Werkstoff allein massgebend ist.

Beim Arbeiten mit «gleitendem Translator» wird dem Vergleicher 27 ein Sollwertsignal 28, das die Vorgabe der Soll-Induktion im Magnetfeld 65 bildet, zugeführt.

Bei «gleitendem Translator» wird das optimierte Differenzsignal 35 dazu benutzt, über den Vier-Quadranten-Servoregler 36 die magnetische Induktion im Magnetfeld 65 wieder auf den Sollwert zu bringen bzw. konstant zu halten.

**Patentansprüche**

1. Verfahren zur Bearbeitung eines insbesondere ultraharten Werkstoffs oder Werkstücks mittels Ultraschall, wobei ein zustellbares Bearbeitungswerkzeug (6) mit zumindest weitgehend konstantem, mittels einer Regelungsvorrichtung geregeltem Auflagedruck am Werkstoff oder Werkstück angedrückt wird, dadurch gekennzeichnet, dass die Zustellbewegung beim Eindringen des Bearbeitungswerkzeugs (6) in den Werkstoff oder das Werkstück mittels eines Wegaufnehmers (16) erfasst und der Wegwert in einen Druckwert für den Vorschub einer hilfskraftgesteuerten, insbesondere hydraulischen oder pneumatischen Vorschubeinrichtung (8) für das Werkzeug umgesetzt wird, der den abgefallenen Auflagedruck auf den Druck-Sollwert erhöht.

2. Verfahren nach Anspruch 1, dadurch gekennzeichnet, dass der Wegwert des Wegaufnehmers (16) in einer Vergleichsvorrichtung (27) mit einem Weg-Sollwert (28) verglichen wird, dass ein Differenzwert (49) der Vergleichsvorrichtung (27) einem Regler (36) übermittelt wird und durch letzteren bei pneumatischer oder hydraulischer Hilfskraft der Zylinder (9) od. dgl. der pneumatischen oder hydraulischen Vorschubeinrichtung (8) im Sinne einer Wiederherstellung eines Soll-Volumens im Zylinder (9) od dgl. verschoben wird.

3. Verfahren nach Anspruch 1 oder 2, dadurch gekennzeichnet, dass der Wegwert des Wegaufnehmers (16) in einer Vergleichsvorrichtung (27) mit einem Weg-Sollwert (28) verglichen wird, dass ein Differenzwert (49) der Vergleichsvorrichtung (27) einem Regler (36) übermittelt wird und durch letzteren bei pneumatischer oder magnetischer Hilfskraft die hilfskraftgesteuerte Vorschubeinrichtung, der Zylinder (9) od. dgl. der pneumatischen oder hydraulischen Vorschubeinrichtung (8) im Sinne einer Wiederherstellung eines Soll-Drucks im Druckzylinder (9) od. dgl. verschoben wird.

4. Verfahren nach Anspruch 2 oder 3, dadurch gekennzeichnet, dass das Differenzsignal (49) der Vergleichsvorrichtung (27) unter Berücksichtigung zumindest der mechanischen Eigenresonanz sowie des Verlaufs des Druckgradienten in der Regelstrecke verstärkt und geformt wird, um ein angepasstes Differenzsignal (31) für einen Regelverstärker (32) zu bilden.

5. Verfahren nach Anspruch 4, dadurch gekennzeichnet, dass das angepasste Differenzsignal (31) im Regelverstärker (32) in Abhängigkeit von der aktuellen Phase der Bearbeitung (33) in seinem Zeitverhalten variiert und anschliessend von einem Signal (34) des Zyklus einer Suspension für die Bearbeitung und Kühlung überlagert wird, wobei das hierdurch gebildete optimierte Differenzsignal (35) an den Regler, insbesondere einen Vier-Quadranten-Servoregler (36), weitergeleitet wird.

6. Verfahren nach Anspruch 1, dadurch gekennzeichnet, dass der Wegwert (23) des Wegaufnehmers (16) einer Vorschubeinrichtung für die Konstanthaltung eines Soll-Volumens oder Soll-Drucks im Zylinder (9) od. dgl. einer pneumatischen oder hydraulischen Vorschubeinrichtung (8) unmittelbar übermittelt wird.

7. Verfahren nach Anspruch 5, dadurch gekennzeichnet, dass das Gewicht der verschiebefest mit dem Bearbeitungswerkzeug verbundenen Teile einer Bearbeitungsvorrichtung mittels eines Gegendrucks im Zylinder (9) od. dgl. kompensiert wird.

8. Verfahren nach Anspruch 2, dadurch gekennzeichnet, dass der Wegwert des Wegaufnehmers (16) in einer Vergleichsvorrichtung (27) mit einem Weg-Sollwert (28) verglichen wird, dass ein Differenzwert (49) der Vergleichsvorrichtung (27) einem Regler (36) übermittelt wird und durch letzteren bei konstanter magnetischer Hilfskraft ein Stator im Sinne einer Wiederherstellung der Soll-Position zwischen Stator und Translator verschoben wird.

9. Verfahren nach Anspruch 1, dadurch gekennzeichnet, dass der Wegwert des Wegaufnehmers (16) in einer Vergleichsvorrichtung (27) mit einem Weg-Sollwert (28) verglichen wird, dass ein Differenzwert (49) der Vergleichsvorrichtung (27) einem Regler (36) übermittelt wird und durch letzteren bei magnetischer Hilfskraft der Translator im Sinne einer Wiederherstellung des Werkzeugsolldruckes auf das Werkstück beaufschlagt wird.

10. Verfahren nach Anspruch 1 und mindestens einem der Ansprüche 8 und 9, dadurch gekennzeichnet, dass der Wert des magnetischen Flusses zwischen Stator und Translator von einem Magnetfluss-Aufnehmer (52) in einer Vergleichsvorrichtung (27) mit einem Magnetfluss-Sollwert (28 verglichen wird, dass ein Differenzwert (49) der Vergleichsvorrichtung (27) einem Regler (36) übermittelt wird und durch letzteren bei magnetischer Hilfskraft der Translator (51) im Sinne einer Wiederherstellung des Werkzeugsolldruckes auf das Werkstück beaufschlagt wird.

11. Vorrichtung zur Bearbeitung eines insbesondere ultraharten Werkstoffs oder Werkstücks mittels Ultraschall zur Durchführung des Verfahrens nach wenigstens einem der vorhergehenden Patentansprüche mit einer verschiebbar gelagerten Pinole (2), die an ihrem freien Ende ein mit geregeltem, konstantem Anpressdruck arbeitendes Bearbeitungswerkzeug (6) trägt, wobei das Bearbeitungswerkzeug (6) mittels eines Ultraschalltransformators (5) und eines Ultraschallwandlers (4) erregbar ist, dadurch gekennzeichnet, dass die Pinole (2), insbesondere an ihrem vom Bearbeitungswerkzeug (6) abgewandten Ende, mit einer von einem Wegaufnehmer (16) steuerbaren, hilfskraftbetätigten, den Anpressdruck in Zustellrichtung der Pinole aufbringenden, vorzugsweise hydraulischen oder pneumatischen Vorschubeinrichtung (8) verbunden ist, wobei der Wegaufnehmer (16) mechanisch zwischen einen Vorschubkopf (1) und die Pinole (2) geschaltet ist.

12. Vorrichtung nach Anspruch 11, dadurch gekennzeichnet, dass sich am freien Ende der Pinole (2) ein Ultraschallwandler (4) befindet, an dem ein Ultraschall-Transformator (5) befestigt ist, der seinerseits das Bearbeitungswerkzeug (6) trägt.

13. Vorrichtung nach Anspruch 12, dadurch gekennzeichnet, dass der Wegaufnehmer (16) ein am Vorschubkopf (1) befestigter, induktiver Wegaufnehmer ist, dessen Taststift (17 od. dgl. Fühlelement am Ultraschallwandler (4) anliegt.

14. Vorrichtung nach wenigstens einem der Ansprüche 11 bis 13, mit pneumatischer oder hydraulischer Hilfskraft, dadurch gekennzeichnet, dass das vom Bearbeitungswerkzeug (6) abgewandte Ende der Pinole (2) mit einer Membrane oder einem Kolben (10) einer Druckkammer (13) der pneumatischen oder hydraulischen Vorschubeinrichtung (8) verbunden ist.

15. Vorrichtung nach Anspruch 14, dadurch gekennzeichnet, dass die Druckkammer (13) durch einen pneumatischen oder hydraulischen Zylinder (9) gebildet ist.

16. Vorrichtung nach Anspruch 15, dadurch gekennzeichnet, dass der pneumatische oder hydraulische Zylinder (9) als doppeltwirkender Zylinder ausgebildet ist und die beiden durch die Membrane oder den Kolben (10) voneinander getrennten Zylinderräume (11, 13) mit vorzugsweise unterschiedlichen Drücken beaufschlagt sind.

17. Vorrichtung nach wenigstens einem der Ansprüche 11 bis 16, dadurch gekennzeichnet, dass die Pinole (2) mittels einer Kugelumlaufbahn (7) verschiebbar im Vorschubkopf (1) od. dgl. geführt ist.

18. Vorrichtung nach wenigstens einem der Ansprüche 11 bis 17, dadurch gekennzeichnet, dass der Wegaufnehmer (16) mit einem Oszillator-Demodulator (24, 25) verbunden ist, der seinerseits mit einem Vergleicher (27) verbunden ist, welcher mit einem Servo-Regler (36), insbesondere Vier-Quadranten-Servoregler, in Verbindung steht, wobei der Servo-Regler mit einem Antriebsmotor (38) für die Vorschubbewegung des Vorschubkopfs (1) od. dgl. verbunden ist, und dass der Antriebsmotor über einen Tachometer (40) mit dem Servo-Regler (36) in Verbindung steht, wobei der Vergleicher (27) zusätzlich mit einem Sollwertgeber (29) verbunden ist.

19. Vorrichtung nach Anspruch 18, dadurch gekennzeichnet, dass der Oszillator-Demodulator (24, 25) über eine Vergleichsvorrichtung (27) mit einem nachgeschalteten ersten Reglerverstärker (30) mit dem Servo-Regler (36) verbunden ist, die zusätzlich noch mit einer Vorrichtung (29) zur Erzeugung eines Sollwertsignals in Verbindung steht.

20. Vorrichtung nach Anspruch 19, dadurch gekennzeichnet, dass die Vergleichsvorrichtung (27) mit nachgeschaltetem erstem Regelverstärker (30) indirekt über einen zweiten Regelverstärker (32) mit dem Servo-Regler (36) verbunden ist, wobei der zweite Regelverstärker (32) mit je einem Signalgeber (42, 43) für den Zyklus der Suspensionszuführung und die Optimierung der aktuellen Phase der Bearbeitung verbunden ist.

21. Vorrichtung nach Anspruch 20, gekennzeichnet durch eine steuerbare Arretierungsvorrichtung (44) für die Pinole (2), wobei der Signalgeber (42) für den Zyklus der Suspensionszuführung mit dem zweiten Regelverstärker (32) einerseits und der Arretierungsvorrichtung (44) andererseits verbunden ist.

22. Vorrichtung nach Anspruch 20, dadurch gekennzeichnet, dass der Signalgeber (42) mit dem zweiten Regelverstärker (32) einerseits und einer Zusatz-Arretierungsvorrichtung (45) für den Vorschubkopf (1) andererseits verbunden ist.

23. Vorrichtung nach Anspruch 22, dadurch gekennzeichnet, dass die Zusatz-Arretierungsvorrichtung (45) als Bremse für den Motor (38) des Vorschubkopfes (1) ausgebildet ist.

24. Vorrichtung nach wenigstens einem der Ansprüche 12 bis 16, sowie Anspruch 22 oder 23, dadurch gekennzeichnet, dass der Anschluss (12) für das Druckmedium zum Zylinderraum (11) mit einer, insbesondere einstellbaren, ersten Druckregelvorrichtung (46) verbunden ist und parallel zu letzterer eine mittels eines Absperrorgans absperrbare By-pass-Leitung (47) vorhanden ist, wobei das Absperrorgan (47) mit dem Signalgeber (42) verbunden ist.

25. Vorrichtung nach Anspruch 24, dadurch gekennzeichnet, dass der Anschluss (14) für das Druckmedium im Druckraum (13) mit einer, insbesondere einstellbaren, Druckregelvorrichtung (48) verbunden ist.

26. Vorrichtung nach Anspruch 25, dadurch gekennzeichnet, dass ein Druckaufnehmer (53) im Zylinderraum (13) installiert ist, der seinerseits mit einem Druckvergleicher (55) verbunden ist, welcher einerseits mit einem Drucksollwertgeber (56) und andererseits mit einem Druckregelverstärker (59) verbunden ist, der seinerseits mit der Druckregelvorrichtung (48) in Verbindung steht.

**Revendications**

1. Procédé d'usinage aux ultrasons d'un matériau ou d'une pièce notamment ultradur, dans lequel un outil d'usinage réglable (6) est pressé contre le matériau ou la pièce avec une pression de contact au moins largement constante, réglée au moyen d'un dispositif de réglage, caractérisé par le fait que le mouvement de présentation lors de la pénétration de l'outil d'usinage (6) dans le matériau ou la pièce est détecté au moyen d'un détecteur de courses (16), puis la valeur de la course est convertie en une valeur de pression pour l'avance d'un dispositif d'avance (8) notamment hydraulique ou penumatique, commandé par une force auxiliaire et associé à l'outil, cette valeur accroissant, jusqu'à la valeur de consigne de la pression, la pression de contact ayant chuté.

2. Procédé selon la revendication 1, caractérisé par le fait que la valeur indiquée par le détecteur de courses (16) est comparée dans un dispositif comparateur (27) à une valeur de consigne de la course (28); par le fait qu'une valeur différentielle (49) du dispositif comparateur (27) est transmise à un régulateur (36); et par le fait que, en présence d'une force auxiliaire pneumatique ou hydraulique, ce dernier agit sur le cylindre (9) ou élément analogue du dispositif d'avance pneumatique ou hydraulique (8), dans le sens du rétablissement d'un volume de consigne dans le cylindre (9) ou élément analogue.

3. Procédé selon la revendication 1 ou 2, caractérisé par le fait que la valeur indiquée par le détecteur de courses (16) est comparée dans un dispositif comparateur (27) à une valeur de consigne de la course (28); par le fait qu'une valeur différentielle (49) du dispositif comparateur (27) est transmise à un régulateur (36); et par le fait que, en présence d'une force auxiliaire pneumatique ou magnétique, ce dernier agit sur le dispositif d'avance commandé par la force auxiliaire, sur le cylindre (9) ou élément analogue du dispositif d'avance pneumatique ou hydraulique (8), dans le sens du rétablissement d'une pression de consigne dans le cylindre de pression (9) ou élément analogue.

4. Procédé selon la revendication 2 ou 3, caractérisé par le fait que le signal différentiel (49) du dispositif comparateur (27) est amplifié et mis en forme, en tenant compte au moins de la résonance mécanique propre ainsi que de l'allure du gradient de pression sur le trajet de réglage, de manière à former un signal différentiel adapté (31) pour un amplificateur de réglage (32).

5. Procédé selon la revendication 4, caractérisé par le fait que le signal différentiel adapté (31) varie quant à son allure temporelle, dans l'amplificateur de réglage (32), en fonction de la phase d'usinage (33) à un instant considéré, pour être ensuite superposé par un signal (34) du cycle d'une suspension en vue de l'usinage et du refroidissement, le signal différentiel optimalisé (35) ainsi formé étant alors transmis au régulateur, en particulier à un servorégulateur (36) à quatre quadrants.

6. Procédé selon la revendication 1, caractérisé par le fait que la valeur (23) indiquée par le détecteur de courses (16) est directement transmise à un dispositif d'avance, pour maintenir constant un volume de consigne ou une pression de consigne dans le cylindre (9) ou élément analogue d'un dispositif d'avance pneumatique ou hydraulique. (8).

7. Procédé selon la revendication 5, caractérisé par le fait que le poids des pièces d'un dispositif d'usinage assujetties en coulissement à l'outil d'usinage est compensé au moyen d'une contrepression dans le cylindre (9) ou élément analogue.

8. Procédé selon la revendication 2, caractérisé par le fait que la valeur indiquée par le détecteur de courses (16) est comparée dans un dispositif comparateur (27) à une valeur de consigne de la course (28); par le fait qu'une valeur différentielle (49) du dispositif comparateur (27) est transmise à un régulateur (36); et par le fait que, en présence d'une force auxiliaire magnétique constante, ce dernier agit sur un stator dans le sens d'un rétablissement de la position de consigne entre le stator et un translateur.

9. Procédé selon la revendication 1, caractérisé par le fait que la valeur indiquée par le détecteur de courses (16) est comparée dans un dispositif comparateur (27) à une valeur de consigne de la course (28); par le fait qu'une valeur différentielle (49) du dispositif comparateur (27) est transmise à un régulateur (36); et par le fait que, en présence d'une force auxiliaire magnétique, ce dernier agit sur le translateur dans le sens d'un rétablissement de la pression de consigne de l'outil sur la pièce.

10. Procédé selon la revendication 1 et au moins l'une des revendications 8 et 9, caractérisé par le fait que la valeur du flux magnétique entre le stator et le translateur est comparée par un détecteur de flux magnétiques (52), dans un dispositif comparateur (27), à une valeur de consigne (28) du flux magnétique; et par le fait qu'une valeur différentielle (49) du dispositif comparateur (27) est transmise à un régulateur (36), lequel, en présence d'une force auxiliaire magnétique, agit sur le translateur (51) dans le sens d'un rétablissement de la pression de consigne de l'outil sur la pièce.

11. Dispositif d'usinage aux ultrasons d'un matériau ou d'une pièce notamment ultradur, pour la mise en œuvre du procédé selon au moins l'une des revendications précédentes, présentant un fourreau coulissant (2) qui est monté à coulissement et porte, à son extrémité libre, un outil d'usinage (6) fonctionnant avec une pression de contact constante réglée, l'outil d'usinage (6) pouvant être excité au moyen d'un transformateur d'ultrasons (5) et d'un convertisseur d'ultrasons (4), caractérisé par le fait que le fourreau coulissant (2) est relié, en particulier par son extrémité tournée à l'opposé de l'outil d'usinage (6), à un dispositif d'avance (8), de préférence hydraulique ou pneumatique, qui peut être commandé par un détecteur de courses (16), est actionné par une force auxiliaire et développe la pression de contact dans la direction de présentation du fourreau coulissant, le détecteur de courses (16) étant intercalé mécaniquement entre une tête d'avance (1) et le foureeau coulissant (2).

12. Dispositif selon la revendication 11, caractérisé par le fait qu'un convertisseur d'ultrasons (4) se trouve à l'extrémité libre du fourreau coulissant (2), convertisseur auquel est fixé un transformateur d'ultrasons (5) portant à son tour l'outil d'usinage (6).

13. Dispositif selon la revendication 12, caractérisé par le fait que le détecteur de courses (16) est un détecteur de courses inductif fixé à la tête d'avance (1), dont la tige palpeuse (17) ou élément détecteur analogue porte contre le convertisseur d'ultrasons (4).

14. Dispositif selon au moins l'une des revendications 11 à 13, fonctionnant avec une force auxiliaire pneumatique ou hydraulique, caractérisé par le fait que l'extrémité du fourreau coulissant (2) tournée à l'opposé de l'outil d'usinage (6) est reliée à une membrane ou à un piston (10) d'une chambre de pression (13) du dispositif d'avance pneumatique ou hydraulique (8).

15. Dispositif selon la revendication 14, caractérisé par le fait que la chambre de pression (13) est formée par un cylindre pneumatique ou hydraulique (9).

16. Dispositif selon la revendication 15, caractérisé par le fait que le cylindre pneumatique ou hydraulique (9) est réalisé sous la forme d'un cylindre à double action, les deux chambres cylindriques (11, 13) séparées l'une de l'autre par la membrane ou par le piston (10) étant, de préférence, sollicitées par des pressions différentes.

17. Dispositif selon au moins l'une des revendications 11 à 16, caractérisé par le fait que le fourreau coulissant (2) est guidé à coulissement, dans la tête d'avance (1) ou élément analogue, au moyen d'un chemin (7) de roulement de billes.

18. Dispositif selon au moins l'un des revendications 11 à 17, caractérisé par le fait que le détecteur de courses (16) est relié à un oscillateur-démodulateur (24, 25) raccordé, à son tour, à un comparateur (27) en liaison avec un servorégulateur (36), notamment un servorégulateur à quatre quadrants, ce servorégulateur étant relié à un moteur d'entraînement (38) du mouvement d'avance de la tête d'avance (1) ou élément analogue; et par le fait que le moteur d'entraînement est en liaison avec le servorégulateur (36) par l'entremise d'un tachimètre (40), le comparateur (27) étant raccordé en plus à un indicateur (29) de valeurs de consigne.

19. Dispositif selon la revendication 18, caractérisé par le fait que l'oscilateur-démodulateur (24, 25) est relié au servorégulateur (36) par l'intermédiaire d'un dispositif comparateur (27), en aval duquel est branché un premier amplificateur de réglage (30) et qui est de plus en liaison avec un dispositif (29) pour engendrer un signal de valeur de consigne.

20. Dispositif selon la revendication 19, caractérisé par le fait que le dispositif comparateur (27), en aval duquel le premier amplificateur de réglage (30) est branché, est relié indirectement au servorégulateur (36) par l'intermédiaire d'un second amplificateur de réglage (32), ce second amplificateur de réglage (32) étant raccordé à un générateur respectif de signaux (42, 43) pour le cycle de la délivrance d'une suspension et pour l'optimalisation de la phase d'usinage à un instant considéré.

21. Dispositif selon la revendication 20, caractérisé par un dispositif commandable (44) d'arrêt du fourreau coulissant (2), le générateur de signaux (42) pour le cycle de la délivrance d'une suspension étant raccordé, d'une part, au second amplificateur de réglage (32) et, d'autre part, au dispositif d'arrêt (44).

22. Dispositif selon la revendication 20, caractérisé par le fait que le générateur de signaux (42) est relié, d'une part, au second amplificateur de réglage (32) et, d'autre part, à un dispositif supplémentaire (45) d'arrêt de la tête d'avance (1).

23. Dispositif selon la revendication 22, caractérisé par le fait que le dispositif d'arrêt supplémentaire (45) est réalisé sous la forme d'un frein du moteur (38) de la tête d'avance (1).

24. Dispositif selon au moins l'une des revendications 12 à 16 et la revendication 22 ou 23, caractérisé par le fait que le raccord (12) d'admission du fluide sous pression à la chambre cylindrique (11) est relié à un premier dispositif (46) régulateur de pression, en particulier ajustable; et par le fait qu'un conduit de dérivation (70) pouvant être isolé au moyen d'un organe d'isolement est parallèle audit dispositif, l'organe d'isolement (47) étant raccordé au générateur de signaux (42).

25. Dispositif selon la revendication 24, caractérisé par le fait que le raccord (14) d'admission du fluide sous pression dans la chambre de pression (13) est relié à un dispositif (48) régulateur de pression, en particulier ajustable.

26. Dispositif selon la revendication 25, caractérisé par le fait que la chambre cylindrique (13) renferme un détecteur de pression (53) relié à son tour à un comparateur de pressions (55), qui est raccordé, d'une part, à un indicateur (56) de valeurs de consigne de la pression et, d'autre part, à un amplificateur (59) de réglage de la pression, lequel est à son tour en liaison avec le dispositif (48) régulateur de pression.

## Claims

1. Method of ultrasonic machining a particularly ultrahard material or workpiece, in which an advanceable machining tool (6) is pressed against the workpiece or material at a pressure which is at least substantially constant and which is regulated by a control device, characterised in that upon penetration of the machining tool (6) into the material or the workpiece, the feeding movement is detected by a travel recorder (16), the travel value being converted into a pressure value for the feed of an auxiliary power controlled, particularly hydraulic or pneumatic feed device (8) for the tool which increases the abated application pressure to the desired pressure level.

2. Method according to Claim 1, characterised in that the travel value of the travel recorder (16) is compared with a desired travel value (28) in a comparator device (27) and in that a differential value (49) provided by the comparator device (27) is fed to a controller (36) and is by the latter, with pneumatic or hydraulic auxiliary force from the cylindrers (9) or the like of the pneumatic or hydraulic feed device (8), displaced in order to restore a desired volume in the cylinder (9) or the like.

3. Method according to Claim 1 or 2, characterised in that the travel value from the travel recorder (16) is compared with a desired travel value (28) in a comparator device (27) and in that a differential value (49) from the comparator device (27) is fed to a controller (36) which, with pneumatic or magnetic auxiliary force, displaces the auxiliary power operated feed device, the cylinder (9) or the like of the pneumatic or hydraulic feed device (8) in order to restore a desired pressure in the pressure cylinder (9) or the like.

4. Method according to Claim 2 or 3, characterised in that the differential signal (49) from the comparator device (27), while allowing for at least the mechanical inherent resonance and the pattern of the pressure gradient in the control path, is amplified and formed in order to constitute an adapted differential signal (31) for a control amplifier (32).

5. Method according to Claim 4, characterised in that the adapted differential signal (31) is varied in the control amplifier (32) as a function of the current phase of machining (33) in terms of its time-related behaviour and is then overlaid by a signal (34) fo the cycle of a suspension for machining and cooling, the optimum differential signal (35) thus constituted being passed onto the controller which is in particular a four-quadrant servo controller (36).

6. Method according to Claim 1, characterised in that the travel value (34) of the travel recorder (16) of a feed device is ascertained directly in order to maintain constant a desired volume or desired pressure in the cylinder (9) or the like of a pneumatic or hydraulic feed device (8).

7. Method according to Claim 5, characterised in that the weight of the parts of a machining device which are rigid for displacement with the machining tool is compensated for by a counter pressure in the cylinder (9) or the like.

8. Method according to Claim 2, characterised in that the travel value of the travel recorder (16) is compared with a desired travel value (28) in a comparator device (27) and in that a differential value (49) from the comparator device (27) is passed to a controller (36), which latter, for a constant magnetic auxiliary force, displaces a stator in such a way as to restore the desired position between stator and translator.

9. Method according to Claim 1, characterised in that the travel value of the travel recorder (16) is compared with a desired travel value (28) in a comparator device (27) and in that a differential value (49) from the comparator device (27) is passed to a controller (36), by which latter, for a constant magnetic auxiliary force, the translator is subjected to action with a view to restoring the desired tool pressure on the workpiece.

10. Method according to Claim 1 and at least one of Claims 8 and 9, characterised in that the value of magnetic flux between stator and translator is compared by a magnetic flux recorder (52) in a comparator device (27) with a desired value of magnetic flux (28) and in that a differential value (49) from the comaprator device (27) is passed to a controller (36) by which latter, upon magnetic auxiliary force, the translator (51) is subjected to action with a view to restoring the desired tool pressure on the workpiece.

11. Apparatus for machining a particularly ultra-hard material or workpiece by ultrasonics for carying out the method according to at least one of the preceding Patent Claims, comprising a displaceably mounted sleeve (2) carrying at its free end a machining tool (6) operating at a regulated constant pressure, the machining tool (6) being adapted to be energised by an ultrasonic transformer (5) and an ultrasonic transducer (4), characterised in that the sleeve (2), particularly at its end which is remote from the machining tool (6), is connected to a preferably hydraulic or pneumatic feed device (8) which can be controlled by a travel recorder (16), is actuated by an auxiliary force and applies the pressure in the direction of feed of the sleeve, the travel recorder (16) being mechanically connected between a feed head (1) and the sleeve (2).

12. Apparatus according to Claim 11, characterized in that there is at the free end of the sleeve (2) an ultrasonic transducer (4) on which is fixed an ultrasonic transformer (5) which in turn carries the machining tool (6).

13. Apparatus according to Claim 12, characterized in that the travel recorder (16) is an inductive travel recorder mounted on the feed head (1) and of which the sensing pin (17) or like sensing element bears on the ultrasonic transducer (4).

14. Apparatus according to at least one of Claims 11 to 13, with pneumatic or hydraulic auxiliary force, characterised in that the end of the sleeve (2) which is remote from the machining tool (6) is connected to a diaphragm or a piston (10) fo a pressure chamber (13) of the pneumatic or hydraulic feed device (8).

15. Apparatus according to Claim 14, characterised in that the pressure chamber (13) is constituted by a pneumatic or an hydraulic cylinder (9).

16. Apparatus according to Claim 15, characterised in that the pneumatic or hydraulic cylinder (9) is constructed as a double-acting cylinder, the two cylinder spaces (11, 13) which are separated from each other by the diaphragm or the piston (10) being subjected to preferably different pressures.

17. Apparatus according to at least one of Claims 11 to 16, characterised in that the sleeve (2) is displaceably guided in the feed head (1) or the like by a ball race (7).

18. Apparatus according to at least one of Claims 11 to 17, characterised in that the travel recorder (16) is connected to an oscillator-demodulator (24, 25) which is in turn connected to a comparator (27) which communicates with a servo-controller (36), particularly a four quadrant servo-controller, the latter being connected to a driving motor (38) for the feed movement of the feed head (1) or the like and in that the driving motor is connected to the servo-controller (36) via a tachometer (40), the comparator (27) being additionally connected to a desired value transmitter (29).

19. Apparatus according to Claim 18, characterised in that the oscillator-demodulator (24, 25) is connected by a first controller amplifier (30) on the downstream side of a comparator device (22) to the servo-controller (36), the comparator device (27) being additionally connected to a device (27) for generating a desired value signal.

20. Apparatus according to Claim 19, characterised in that the comparator device (27) has on the downstream side a first controller amplifier (30) by which it is indirectly connected through a second controller amplifier (32) to the servo-controller (36), the second controller amplifier (32) being connected with respective signal transmitters (42, 43) for the suspension feed cycle and for optimising the current phase of machining.

21. Apparatus according to Claim 20, characterised by a controllable locking device (44) for the sleeve (2), the signal transmitter (42) for the cycle of suspension feed being connected to the second controller amplifier (32) on the one hand and the locking device (44) on the other.

22. Apparatus according to Claim 20, characterised in that the signal transmitter (42) is connected to the second controller amplifier (32) on the one hand and to an auxiliary locking device (45) for the feed head (1) on the other.

23. Apparatus according to Claim 22, characterised in that the auxiliary locking device (49) is constructed as a brake for the motor (38) of the feed head (1).

24. Apparatus according to at least one of Claims 12 to 16 and Claim 22 or 23, characterised in that the connection (12) for the pressurised medium to the cylinder space (11) is connected to a first pressure regulating device (46) which is in particular adjustable while parallel with the latter and adapted to be shut off by a check means there is a by-pass line (47), the check means (47) being connected to the signal transmitter (42).

25. Apparatus according to Claim 24, characterised in that the connection (14) for pressurised medium in the pressure space (13) is connected to a pressure regulating device (48) which is in particular adjustable.

26. Apparatus according to Claim 25, characterised in that installed in the cylinder space (13) is a pressure recorder (53) which is in turn connected to s pressure comparator (55) which is connected in turn to a desired pressure value transmitter (56) and on the other to a pressure regulating amplifier (59) which is in turn connected to the pressure regulating device (48).

FIG. 1

Fig.2

0 124 690

Fig. 3